# EUROPÄISCHE PATENTSCHRIFT

(11) **EP 0 926 013 B1**
(45) Veröffentlichungstag und Bekanntmachung des Hinweises auf die Patenterteilung: **25.09.2002**
(21) Anmeldenummer: 98123517.9
(22) Anmeldetag: 15.12.1998
(51) Int. Cl.: B60R 21/20

(54) **Gassack-Modul mit Abdeckung**
Airbag module with cover
Module de coussin gonflable comportant un couvercle

(30) Priorität: 23.12.1997 DE 29722780 U
(43) Veröffentlichungstag der Anmeldung: 30.06.1999
(73) Patentinhaber: TRW Occupant Restraint Systems GmbH & Co. KG, 73553 Alfdorf (DE)
(72) Erfinder: Breitweg, Kurt, 73557 Mutlangen (DE)
(74) Vertreter: Degwert, Hartmut, Dipl.-Phys.

(56) Entgegenhaltungen:
- EP-A- 0 774 386
- EP-A- 0 849 126
- FR-A- 1 542 968
- US-A- 5 653 461
- PATENT ABSTRACTS OF JAPAN vol. 095, no. 006, 31. Juli 1995 & JP 07 069161 A (INOAC CORP), 14. März 1995
- PATENT ABSTRACTS OF JAPAN vol. 095, no. 007, 31. August 1995 & JP 07 108891 A (MAZDA MOTOR CORP), 25. April 1995
- PATENT ABSTRACTS OF JAPAN vol. 096, no. 004, 30. April 1996 & JP 07 323800 A (TOYOTA MOTOR CORP), 12. Dezember 1995

## Beschreibung

Die Erfindung betrifft einen Gassack-Modul gemäß dem Oberbegriff von Anspruch 1.

Gattungsgemäße Gassack-Module sind bekannt. Ein Gassack-Modul ist beispielsweise hinter einer Armaturenverkleidung angeordnet und mit einer Abdeckung versehen, die sich optisch in die Armaturenverkleidung eingliedert. Die Abdeckung muß eine gewisse mechanische Stabilität aufweisen, so daß sie den Belastungen während des normalen Gebrauchs eines Fahrzeuges standhalten kann. Insbesondere großflächige Abdeckungen, wie sie beispielsweise zur Abdeckung von Beifahrer-Gassäcken verwendet werden, weisen dadurch eine beträchtliche Masse auf. Wird eine solche Abdeckung während des Entfaltungsvorganges des Gassacks vollständig von der Armaturenverkleidung gelöst, muß sie durch ein Fangband am Gehäuse des Gassack-Moduls gehalten werden. Im Verlauf der Entfaltung des Gassacks wird die Abdeckung dadurch abrupt abgebremst, so daß massive Befestigungsteile für das Fangband an Abdeckung und Gehäuse erforderlich sind, die den hohen auftretenden Spitzenbelastungen standhalten können. Die nach Aktivierung des Gassacks abfliegende Abdeckung kann trotz Sicherung mit einem Fangband auch zu einer Beschädigung der Windschutzscheibe oder anderer Fahrzeugteile führen.

In der gattungsbildenden JP-A-07069161 ist ein Gehäuseteil zur Aufnahme eines Gassacks und eine Abdeckung gezeigt, die durch ein Fangband mit dem Gehäuseteil verbunden ist. An dem Fangband ist ein Anschlußstück vorgesehen, das unter der Wirkung der Zugkräfte, die bei Aktivierung des Gassacks in dem Fangband auftreten, sich bei einem vorbestimmten Wert von dem Fangband löst.

In der FR-A-1 542 968 ist eine Vorrichtung zur Begrenzung der im Falle eines Rückhaltevorgangs in einem Gurtband auftretenden Kräfte gezeigt. Zu diesem Zweck ist das Gurtband über ein Metallband an der Karosserie eines Fahrzeugs verankert. Die während eines Rückhaltevorgangs im Gurtband auftretenden Kräfte können durch die plastische Verformung des Metallbandes gedämpft werden.

In der JP-A-07108891 ist eine Gassackrückhaltevorrichtung mit einem Gehäuse zur Aufnahme eines gefalteten Gassacks sowie eine Abdeckung gezeigt, die so ausgebildet ist, daß bei der Montage des Gehäuses eine gewisse Toleranz hinsichtlich seiner Einbaulage besteht.

In der JP-A-07323800 ist ein Befestigungselement gezeigt, an dem eine Abdeckung eines Gassackmoduls mittels eines Bandes verbunden werden kann.

In der US-A-5 653 461 ist eine Abdeckung für ein Gassackmodul gezeigt, die bei kostengünstiger Produktion ein hohes Maß an Sicherheit gewährleistet. Dazu weist die Abdeckung zwei einstückig angeformte Fangbänder auf, mittels derer sie an einer Instrumententafel über zwei dort angebrachte Schlaufen befestigt werden kann.

In der EP-A-0 774 386 ist eine Vorrichtung zur Befestigung eines Fangbandes gezeigt, die so ausgebildet ist, daß die Fangbänder auf einfache Weise zu befestigen sind und bei Aktivierung des Gassacks flächig belastet werden. Zu diesem Zweck ist ein Ende des Fangbandes zwischen zwei klammerartigen Befestigungselementen eingespannt.

In der EP-A-0 849 126 ist eine Gassackrückhalteeinrichtung für ein Kraftfahrzeug gezeigt, bei der eine Abdeckung mittels mehrerer Fangbänder über ein als Bügel ausgebildetes Befestigungselement mit der Fahrzeugkarosserie verbunden werden kann.

Mit der Erfindung soll extremen Belastungen der Abdeckung eines Gassack-Moduls und anderer Fahrzeugteile bei der Entfaltung des Gassacks entgegengewirkt werden.

Erfindungsgemäß ist hierzu ein Gassack-Modul mit einem Gehäuse zur Aufnahme eines gefalteten Gassacks und einer Abdeckung, die durch wenigstens ein Fangband mittels eines an dem Gehäuse angebrachten Befestigungselements mit dem Gehäuse verbunden ist, vorgesehen, bei dem das Befestigungselement durch eine Lasche mit einem Schlitz zur Einschlaufung des Fangbandes gebildet ist und unter der Wirkung der Zugkräfte, die bei Aktivierung des Gassacks durch die Massenträgheit der Abdeckung in dem Fangband auftreten, durch Biegen eines abgewinkelten Bereichs plastisch verformbar ist. Auf diese Weise kann die kinetische Energie der Abdeckung über einen vorbestimmten Deformierungsweg des Befestigungselementes wirksam abgebaut werden, so daß insbesondere die Beschädigung einer Windschutzscheibe vermieden wird. Auch werden die an dem Befestigungselement, in dem Fangband und an der Befestigung des Fangbandes an der Abdeckung auftretenden Spitzenbelastungen verringert. Dies ermöglicht eine leichtere und/oder kostengünstigere Ausführung des Fangbandes und seiner Befestigungen. Die Anordnung des plastisch verformbaren Befestigungselementes an dem Gehäuse statt an der Abdeckung ermöglicht eine möglichst leichte Ausführung der Abdeckung.

Durch die Ausgestaltung des Befestigungselements als eine Lasche mit einem Schlitz zur Einschlaufung des Fangbandes kann das Befestigungselement auf einfache und kostengünstige Weise, beispielsweise als Blechteil, verwirklicht werden. Die Verbindung des Befestigungselementes und des Fangbandes über einen Schlitz und eine Schlaufe ist zuverlässig und einfach auszuführen.

Vorteilhafterweise ist die Lasche an ihrer Basis abgewinkelt und steht zu Beginn der plastischen Verformung unter einem vorbestimmten Winkel zur Wirkrichtung der Zugkräfte. Diese Maßnahmen stellen eine kontrollierte Deformierung des Befestigungselementes sicher.

In Weiterbildung der Erfindung ist vorgesehen, daß die Lasche am Ende der plastischen Verformung unter einem Winkel von etwa 90° zur Wirkrichtung der Zugkräfte steht. Auf diese Weise ist eine wirkungsvolle Begrenzung des Verformungsweges der Lasche möglich.

Die Deformierungseigenschaften der Lasche können vorteilhafterweise dadurch kontrolliert werden, daß die Lasche mit Ausformungen und/oder Aussparungen versehen ist. Zur Verstärkung der Lasche kann diese mit Sicken oder Profilen versehen sein, so daß sie einer Deformierung einen höheren Widerstand entgegensetzt. Eine Deformierung der Lasche bereits bei geringeren Kräften wird dadurch erreicht, daß die Lasche in dem sich verformenden Bereich beispielsweise mit einer Perforation versehen wird.

Weitere Merkmale und Vorteile der Erfindung ergeben sich aus der folgenden Beschreibung und aus der Zeichnung, auf die Bezug genommen wird. Hierbei zeigen:
Figur 1 eine Schnittansicht eines erfindungsgemäßen Gassack-Moduls,
Figur 2 eine Schnittansicht des Befestigungselementes der Figur 1,
Figur 3 ein Befestigungselement gemäß einer zweiten Ausführungsform der Erfindung, und
Figur 4 ein Befestigungselement gemäß einer weiteren Ausführungsform der Erfindung.

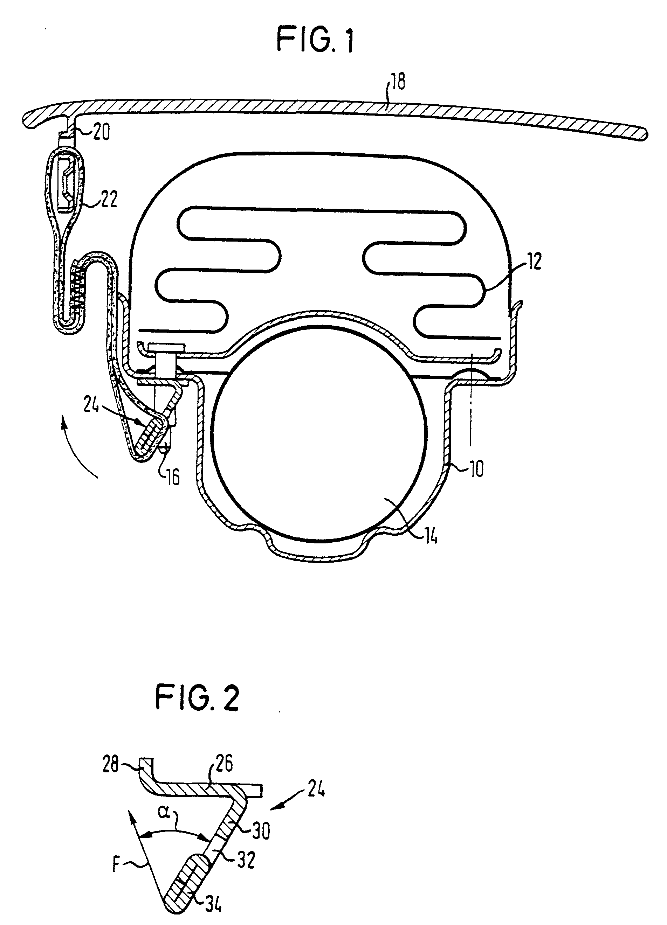

Der in der Figur 1 gezeigte Gassack-Modul weist ein Gehäuse 10 auf, in dem ein gefalteter Gassack 12 sowie ein Gasgenerator 14 aufgenommen sind. Mit Befestigungsbolzen 16 ist der Gassack-Modul an einer nicht gezeigten Fahrzeugstruktur befestigt. Eine Abdeckung 18 deckt den Gassack-Modul zum Fahrzeuginnenraum hin ab. Die Abdeckung 18 weist eine Befestigung 20 für ein Fangband 22 auf, das mit dem Gassack-Modul über ein Befestigungselement 24 verbunden ist. Das Befestigungselement 24 ist an einem der Abdeckung 18 abgewandten Flansch des Gehäuses 10 befestigt. Bei Aktivierung des Gasgenerators 14 entfaltet sich der Gassack 12 und bewegt die Abdeckung 18 nach oben, so daß diese den Weg für den Gassack 12 freigibt und dieser sich zum Schutz eines Fahrzeuginsassen entfalten kann. Nachdem die Abdeckung 18 eine vorbestimmte Wegstrecke zurückgelegt hat, ist das Fangband 22 gespannt. Infolge der impulsartigen Beschleunigung der Abdeckung 18 durch den Gassack 12 bei dessen Entfaltung ist die die Trägheitskraft der Abdeckung 18 zu dicsem Zeitpunkt bereits so groß, daß sie in Verbindung mit dem durch das Befestigungselement 24 vorgegebenen Hebelarm ein Moment verursacht, daß größer als ein vorbestimmter Wert ist. Das Befestigungselement 24 wird sich folglich in Richtung des in der Figur 1 dargestellten Pfeiles deformieren. Durch diese Deformation des Befestigungselementes 24 wird die kinetische Energie der Abdeckung 18 kontrolliert abgebaut, und es treten gegenüber einer starren Befestigung stark verringerte Belastungsspitzenwerte im Fangband 22 und an seinen Befestigungen 20 und 24 auf. Stößt die Abdeckung 18 im Verlauf des Entfaltungsvorgangs des Gassacks 12 beispielsweise an eine Windschutzscheibe, so ist ihre kinetische Energie bereits soweit verringert, daß einer Beschädigung der Windschutzscheibe entgegengewirkt werden kann.

Figur 2 zeigt eine Schnittansicht des Befestigungselementes 24 der Figur 1. Das Befestigungselement 24 ist als Lasche ausgeführt, die aus einem einfachen Blechbiegeteil besteht. Eine Basis 26 weist einen abgewinkelten Abschnitt 28 auf, so daß die Lasche 24 sicher an dem Gehäuse 10 angelegt und befestigt werden kann. Die Lasche 24 weist weiterhin einen abgewinkelten Bereich 30 auf. Die auch der Figur 1 näherungsweise zu entnehmende Wirkrichtung der bei Aktivierung des Gassacks durch die Massenträgheit der Abdeckung im Fangband auftretenden Zugkräfte ist in der Figur 2 durch einen Pfeil F angedeutet. Der abgewinkelte Bereich 30 der Lasche 24 bildet zu dieser Wirkrichtung einen Winkel von ca. 55°. Die Wirkrichtung und die Abmessungen der Lasche 24 sind im allgemeinen durch die Einbauverhältnisse vorgegeben. Durch die Winkelstellung der Lasche 24 kann die Trägheitskraft der Abdeckung an einer Hebellänge angreifen, die ein Moment bewirkt, das eine kontrollierte Einleitung der Verformung der Lasche 24 sicherstellt. Die Winkelstellung der Lasche 24 ist dabei durch einen Kompromiß bestimmt, der sich aus der Erfordernis einer günstigen Hebellänge für die angreifende Trägheitskraft und dem notwendigen Deformierungsweg ergibt. Die Lasche 24 ist ebenfalls mit einem Schlitz 32 versehen, in den das Fangband eingeschlauft wird. Das Fangband wird dabei um einen verrundeten Steg 34 gelegt, der durch Umbiegen des Blechmaterials der Lasche 24 gebildet ist. Die Kraftübertragung von dem Fangband auf den verrundeten Steg 34 und damit die Lasche 24 erfolgt dadurch großflächig, so daß die Belastung des Fangbandes herabgesetzt wird.

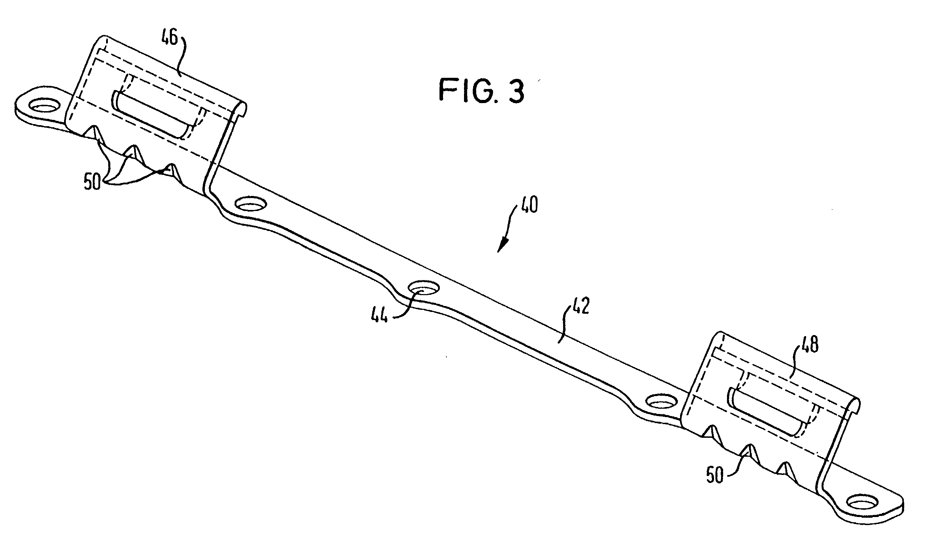

Figur 3 zeigt ein Befestigungselement 40 einer zweiten Ausführungsform des erfindungsgemäßen Gassack-Moduls. Das Befestigungselement 40 ist ähnlich wie das in den Fig. 1 und 2 dargestellte Befestigungselement aufgebaut und besteht aus einer Befestigungsleiste 42, die mit Bohrungen 44 versehen ist. Über die Bohrungen 44 kann das Befestigungselement 40 an einem Gassack-Modul befestigt werden. An der Befestigungsleiste 42 sind zwei Laschen 46 und 48 angeformt, die jeweils mit einem Schlitz zur Aufnahme jeweils eines Fangbandes versehen sind. Zur Schonung des Fangbandes weisen beide Laschen 46 und 48 einen Schlitz mit einem verrundeten Steg auf. Im Bereich der Laschen 46 und 48 ist deren Basis durch jeweils einen Abschnitt der Befestigungsleiste 42 gebildet. Beide Laschen 46 und 48 sind an ihrer Basis abgewinkelt und der Bereich der Biegung ist an der Außenfläche mit Sicken 50 versehen. Die Sicken 50 versteifen die Laschen 46 bzw. 48, so daß diese einer Verformung einen größeren Widerstand entgegensetzen.

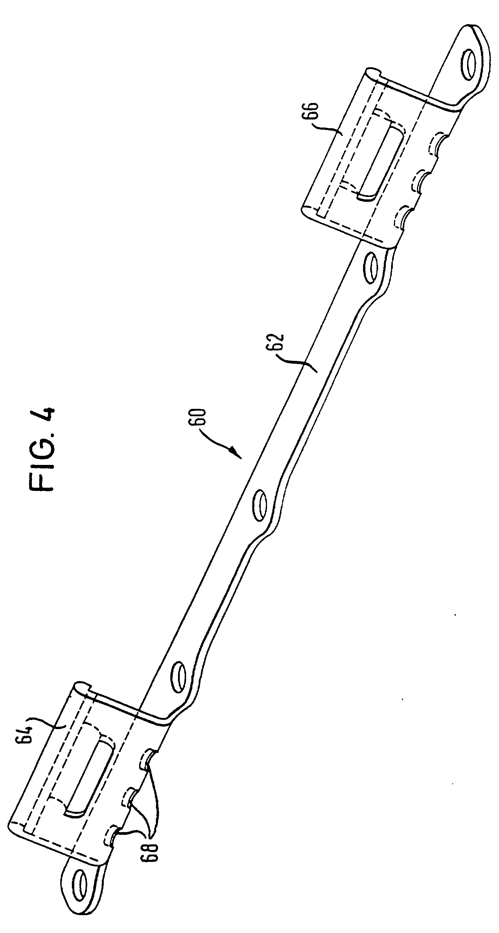

Das in der Figur 4 gezeigte Befestigungselement 60 ist in ähnlicher Weise wie das in der Figur 3 gezeigte Befestigungselement aufgebaut und weist eine Befestigungsleiste 62 mit zwei angeformten Laschen 64 und 66 auf. Die Laschen 64 und 66 sind im Bereich ihrer Biegung mit jeweils drei Bohrungen 68 nach Art einer Perforation versehen. Die Laschen 64 und 66 werden dadurch im Bereich ihrer Biegung geschwächt, so daß sie einer Verformung nur noch einen geringeren Widerstand entgegensetzen. Mit Hilfe der in der Figur 3 und der Figur 4 gezeigten Befestigungselemente ist damit eine Anpassung der Deformierungseigenschaften an verschiedene Einbausituationen und Abdeckungen möglich.

## Patentansprüche

1. Gassack-Modul mit einem Gehäuse (10) zur Aufnahme eines gefalteten Gassacks (12) und einer Abdeckung (18), die durch wenigstens ein Fangband (22) mittels eines an dem Gehäuse (10) angebrachten Befestigungselements (24, 40, 60) mit dem Gehäuse (10) verbunden ist, **dadurch gekennzeichnet, daß** das Befestigungselement durch eine Lasche (24, 46, 48, 64, 66) mit einem Schlitz (32) zur Einschlaufung des Fangbandes (22) gebildet ist und unter der Wirkung der Zugkräfte, die bei Aktivierung des Gassacks (12) durch die Massenträgheit der Abdeckung (18) in dem Fangband (22) auftreten, durch Biegen eines abgewinkelten Bereichs (30) plastisch verformbar ist.

2. Gassack-Modul nach Anspruch 1, **dadurch gekennzeichnet, daß** die Lasche (24; 46; 48; 64, 66) an ihrer Basis (26) abgewinkelt ist und zu Beginn der plastischen Verformung unter einem vorbestimmten Winkel (α) zur Wirkrichtung der Zugkräfte steht.

3. Gassack-Modul nach Anspruch 2, **dadurch gekennzeichnet, daß** der vorbestimmte Winkel (α) zwischen 20° und 70° beträgt.

4. Gassack-Modul nach Anspruch 2, **dadurch gekennzeichnet, daß** der vorbestimmte Winkel (α) zwischen 50° und 70° beträgt.

5. Gassack-Modul nach einem der Ansprüche 2 bis 4, **dadurch gekennzeichnet, daß** die Lasche (24; 46; 48; 64, 66) am Ende der plastischen Verformung unter einem Winkel von etwa 90° zur Wirkrichtung der Zugkräfte steht.

6. Gassack-Modul nach einem der Ansprüche 1 bis 5, **dadurch gekennzeichnet, daß** die Lasche (46; 48; 64, 66) an einer Befestigungsleiste (42; 62) angeformt ist.

7. Gassack-Modul nach Anspruch 6, **dadurch gekennzeichnet, daß** die Befestigungsleiste (42; 62) an einem von der Abdeckung abgewandten Flansch des Gehäuses befestigt ist.

8. Gassack-Modul nach Anspruch 6 oder 7, **dadurch gekennzeichnet, daß** an jedem Ende der Befestigungsleiste (42; 62) eine Lasche (46; 48; 64, 66) für eines von zwei Fangbändern angeordnet ist.

9. Gassack-Modul nach einem der Ansprüche 1 bis 8, **dadurch gekennzeichnet, daß** die Lasche (46; 48; 64, 66) zur Kontrolle der Deformierungseigenschaften mit Ausformungen (50) und/oder Aussparungen (68) versehen ist.

10. Gassack-Modul nach Anspruch 1 oder nach Anspruch 1 und einem der Ansprüche 2 bis 8, **dadurch gekennzeichnet, daß** der Schlitz (32) zur Einschlaufung des Fangbandes (22) einen verrundeten Steg (34) aufweist.

## Claims

1. A gas bag module including a housing (10) for accommodating a folded gas bag (12) and a cover (18) connected to said housing (10) by at least one tether (22) by means of a fastener element (24, 40, 60) provided on said housing (10), **characterized in that** said fastener element is formed by a bracket (24, 46, 48, 64, 66) having a slot (32) for looping in said tether (22) and is plastically deformable by bending a bent-off portion (30) when loaded by the tensile forces occurring in said tether (22) due to the mass inertia of said cover (18) on activation of said gas bag (12).

2. The gas bag module as set forth in claim 1, **characterized in that** said bracket (24; 46, 48; 64, 66) is bent at its base (26) and stands at a predetermined angle (α) to the direction of action of the tensile forces on commencement of the plastic deformation.

3. The gas bag module as set forth in claim 2, **characterized in that** said predetermined angle (α) is between 20° and 70°.

4. The gas bag module as set forth in claim 2, **characterized in that** said predetermined angle (α) is between 50° and 70°.

5. The gas bag module as set forth in any of claims 2 to 4, **characterized in that** said bracket (24; 46, 48; 64, 66) stands at an angle of approximately 90° to the direction of action of the tensile forces on completion of plastic deformation.

6. The gas bag module as set forth in any of claims 1 to 5, **characterized in that** said bracket (46, 48; 64, 66) is formed integrally with a fastener strip (42; 62).

7. The gas bag module as set forth in claim 6, **characterized in that** said fastener strip (42; 62) is secured to a flange of said housing facing away from said cover.

8. The gas bag module as set forth in claim 6 or 7, **characterized in that** each end of said fastener strip (42; 62) has arranged thereon a bracket (46, 48; 64, 66) for one of two tethers.

9. The gas bag module as set forth in any of claims 1 to 8, **characterized in that** said bracket (46, 48; 64, 66) is provided with indentations (50) and/or recesses (68) for controlling the deformation properties.

10. The gas bag module as set forth in claim 1 or in claim 1 and any of claims 2 to 8, **characterized in that** said slot (32) for looping in said tether (22) comprises a rounded web (34).

## Revendications

1. Module de coussin à gaz comportant un boîtier (10) pour recevoir un coussin à gaz (12) plié et un couvercle (18) qui est relié au boîtier (10) par au moins une bande de garde (22) au moyen d'un élément de fixation (24, 40, 60) monté sur le boîtier (10), **caractérisé en ce que** l'élément de fixation est formé par une attache (24, 46, 48, 64, 66) comprenant une fente (32) pour boucler la bande de garde (22) et est plastiquement déformable par le pliage d'une zone coudée (30), sous l'effet des forces de traction qui se produisent dans la bande de garde (22) par l'inertie de masse du couvercle (18) lorsque le coussin à gaz (12) est activé.

2. Module de coussin à gaz selon la revendication 1, **caractérisé en ce que** l'attache (24 ; 46 ; 48 ; 64, 66) est coudée sur sa base (26) et se trouve, au début de la déformation plastique, sous un angle (α) prédéterminé par rapport à la direction d'action des forces de traction.

3. Module de coussin à gaz selon la revendication 2, **caractérisé en ce que** l'angle (α) prédéterminé est entre 20° et 70°.

4. Module de coussin à gaz selon la revendication 2, **caractérisé en ce que** l'angle (α) prédéterminé est entre 50° et 70°.

5. Module de coussin à gaz selon l'une des revendications 2 à 4, **caractérisé en ce qu'**à la fin de la déformation plastique, l'attache (24 ; 46 ; 48 ; 64, 66) est sous un angle d'environ 90° par rapport à la direction d'action des forces de traction.

6. Module de coussin à gaz selon l'une des revendications 1 à 5, **caractérisé en ce que** l'attache (24 ; 46 ; 48 ; 64, 66) est formée sur une barrette de fixation (42 ; 62).

7. Module de coussin à gaz selon la revendication 6, **caractérisé en ce que** la barrette de fixation (42 ; 62) est fixée sur une bride du boîtier qui est détournée du couvercle.

8. Module de coussin à gaz selon la revendication 6 ou 7, **caractérisé en ce qu'**une attache (24 ; 46 ; 48 ; 64, 66) pour une de deux bandes de garde est agencée à chaque extrémité de la barrette de fixation (42 ; 62).

9. Module de coussin à gaz selon l'une des revendications 1 à 8, **caractérisé en ce que** l'attache (46 ; 48 ; 64, 66) est pourvue d'entailles (50) et/ou d'évidements (68).

10. Module de coussin à gaz selon la revendication 1 ou selon la revendication 1 et une des revendications 2 à 8, **caractérisé en ce que** la fente (32) pour boucler la bande de garde (22) présente une nervure arrondie (34).
